(19) Europäisches Patentamt
European Patent Office
Office européen des brevets

(11) EP 0 495 381 B1

(12) EUROPÄISCHE PATENTSCHRIFT

(45) Veröffentlichungstag und Bekanntmachung des Hinweises auf die Patenterteilung:
**17.04.1996 Patentblatt 1996/16**

(51) Int Cl.[6]: **C08G 65/34**, C08L 71/08, B01D 71/52

(21) Anmeldenummer: **92100207.7**

(22) Anmeldetag: **08.01.1992**

# (54) Heteroaromatische Polyether

Heteroaromatic polyethers

Polyether hétéroaromatique

(84) Benannte Vertragsstaaten:
**DE FR GB**

(30) Priorität: **14.01.1991 DE 4100802**

(43) Veröffentlichungstag der Anmeldung:
**22.07.1992 Patentblatt 1992/30**

(73) Patentinhaber: **HOECHST AKTIENGESELLSCHAFT**
**D-65926 Frankfurt am Main (DE)**

(72) Erfinder:
- **Helmreich, Brigitte**
  **W-8046 Garching (DE)**
- **Burger, Klaus, Prof. Dr.**
  **W-8051 Kranzberg (DE)**
- **Maier, Gerhard, Dr.**
  **W-8580 Bayreuth (DE)**
- **Hecht, Reinhold**
  **W-8580 Bayreuth (DE)**
- **Nuyken, Oskar, Prof. Dr.**
  **W-8000 München 81 (DE)**

(56) Entgegenhaltungen:
**EP-A- 0 010 652** **EP-A- 0 161 453**
**EP-A- 0 275 417**

- **PATENT ABSTRACTS OF JAPAN vol. 13, no. 592 (C-671)(3940) 26. Dezember 1989**
- **SOVIET PATENTS ABSTRACTS Week 8539, 8. November 1985 Derwent Publications Ltd., London, GB; AN 85-241094/39**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue heteroaromatische Polyether und Polyetherketone, ein Verfahren zu deren Herstellung sowie deren Verwendung.

Es ist allgemein bekannt, daß Polymere mit Aromaten in der Hauptkette sich durch gute mechanische Eigenschaften, hohe thermische Formstabilität und Beständigkeit gegen Oxidation und diverse Chemikalien auszeichnen. Es ist auch allgemein bekannt, daß durch den Einbau von heteroaromatischen Gruppen die Entflammbarkeit von Polymeren herabgesetzt werden kann. Es ist ferner bekannt, daß Polykondensate aus aliphatischen oder alicyclischen Diol-, Dithiol- oder Diaminoverbindungen mit Bis-(4-fluor-5-trifluormethyl-oxazolyl)-phenylen oder Bis-(4-fluor-5-trifluormethyl-thiazolyl)-phenylen nahezu unlöslich sind (K. Geith, Dissertation 1988, TU München).

Für einige Anwendungsgebiete, beispielsweise für Beschichtungen, ist das Eigenschaftsprofil der vorgenannten Polymeren zum Beispiel hinsichtlich der Löslichkeit noch verbesserungsbedürftig.

Aufgabe ist es daher, geeignete Polymere mit verbesserter Löslichkeit zu synthetisieren.

Gegenstand der Erfindung sind Polyether bestehend aus Wiederholeinheiten der Formel I

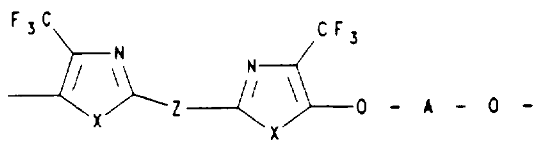

(I) .

worin

A einen divalenten Arylen- oder Heteroarylen-Rest,
X O, S oder NR,
Z einen divalenten Arylen- oder Heteroarylenrest, die Ethinylen-, Azo- oder $(CF_2)_n$-Gruppe, wobei n eine ganze Zahl von 1 bis 4 ist,
R Aryl, vorzugsweise Phenyl,

bedeuten.

Geeignete divalente Arylenreste A sind 1,2-, 1,3- und 1,4-Phenylen, 2,6-Naphthylen und deren kernalkylierte (Alkylgruppen mit 1 bis 4 C-Atomen) oder kernhalogenierte (Fluor, Chlor oder Brom) Derivate, sowie Struktureinheiten der Formel:

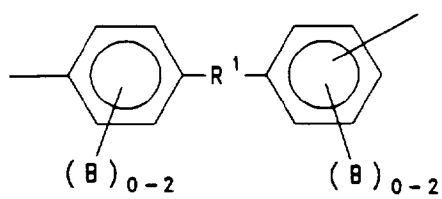

worin $R^1$ gleich $CH_2$, O, CO, $SO_2$, $C(CH_3)_2$, $C(CF_3)_2$, Phenylen,

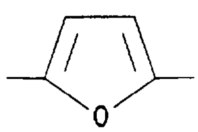 , 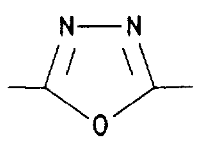 , 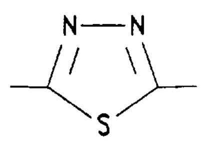

oder eine direkte Bindung, und B gleich Halogen oder $C_1$-$C_4$-Alkyl ist und die einzelnen Phenylen-Ringe durch 0, 1 oder 2 Gruppen B substituiert sind.

Geeignete divalente Heteroarylenreste A sind:

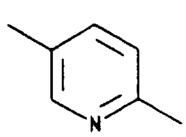 und 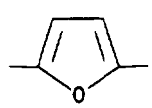 .

Bevorzugte Reste A sind jedoch Arylenreste, insbesondere solche der Formel

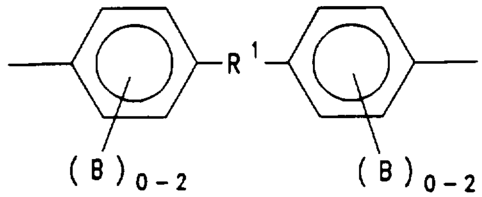

worin $R^1$ gleich $CH_2$, O, CO, $SO_2$, $C(CH_3)_2$, $C(CF_3)_2$, Phenylen,

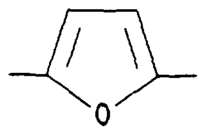 , 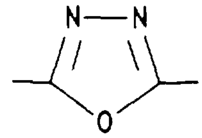 , 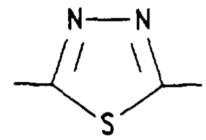

oder eine direkte Bindung, und B, falls vorhanden, gleich Halogen, vorzugsweise Cl oder Br, oder $C_1$-$C_4$-Alkyl, vorzugsweise $CH_3$, ist.

Die Reste B befinden sich bevorzugt in 3- oder 3,5-Stellung zur Brücke $R^1$.

X steht vorzugsweise für O. Geeignete Reste Z sind z.B.

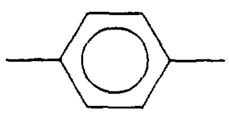 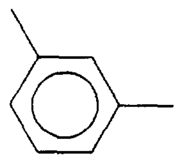 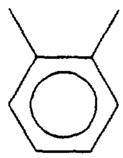 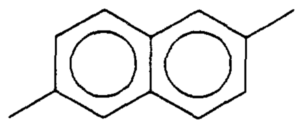

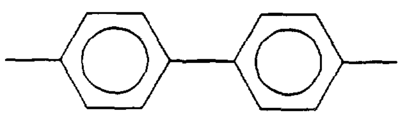 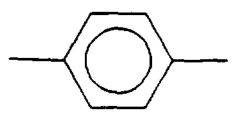 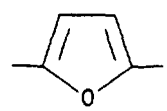

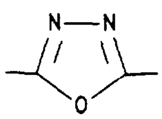 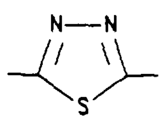 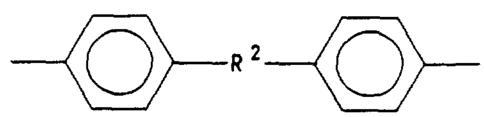

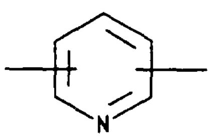 $-C \equiv C-$ (= Ethinylen) $-N=N-$

oder

$$-(CF_2)_{1-4}-,$$

worin $R^2$ gleich $CH_2$, O, CO, $SO_2$, $C(CH_3)_2$ oder $C(CF_3)_2$ ist.

Der Rest Z steht vorzugsweise für Phenylen.

Besonders bevorzugte Polyether, beziehungsweise Polyetherketone, gemäß der Erfindung sind solche mit Wiederholeinheiten der Formel Ia:

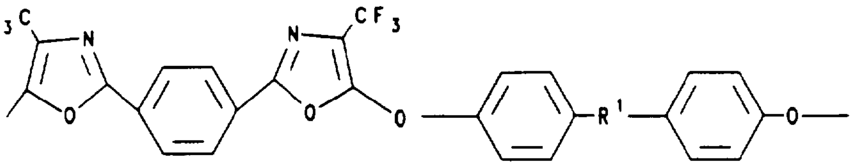 (Ia) ,

worin $R^1$ gleich $CH_2$, CO, $C(CH_3)_2$ oder $C(CF_3)_2$ ist.

Die Polyether gemäß der Erfindung können nach an sich bekannten Verfahren hergestellt werden, so z.B. durch nucleophile Polykondensation von Fluorverbindungen der Formel II

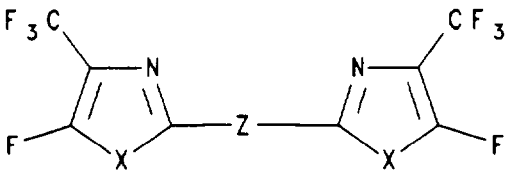 (II)

worin X und Z die obengenannte Bedeutung haben, mit aromatischen oder heteroaromatischen Dihydroxyverbindungen der Formel III

$$\text{HO-A-OH} \qquad \text{(III)},$$

worin A die obengenannte Bedeutung hat, in Gegenwart einer Base.

Die Umsetzung erfolgt vorzugsweise in stark polaren unter den Reaktionsbedingungen jedoch indifferenten organischen Lösungsmitteln wie DMSO, bei Temperaturen von 50-200 °C, vorzugsweise bei 60-150 °C.

Bevorzugt einzusetzende Basen sind Trialkylamine.

Hervorzuheben ist, daß die Herstellung der Polymeren gemäß der Erfindung ohne die Bildung größerer Mengen von Nebenprodukten verläuft. Die nucleophile Polykondensation ist damit bekannten ringbildenden Polykondensationen, die häufig zu unerwünschten Kettenverzweigungen und -vernetzungen führen, technisch deutlich überlegen.

Einige der Verbindungen der Formel II sind bekannt (Burger et al., Synthesis (3) 1988, 199-203), andere in an sich bekannter Weise leicht zugänglich. Die vorzugsweise eingesetzten Verbindungen II mit Z = Arylen und X = O erhält man z.B. dadurch, daß man 2 Mol Hexafluoraceton mit einem Diamid der Formel IV

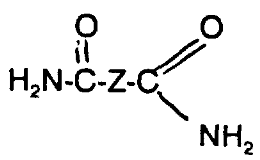 (IV)

(Z = Arylen)

zu Verbindungen der Formel V

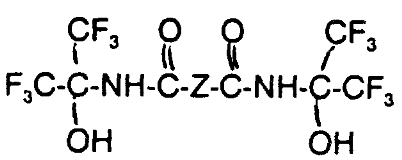 (V)

umsetzt, anschließend diese unter Wasserabspaltung in Verbindungen der Formel VI

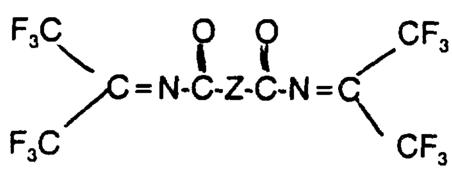 (VI)

überführt und diese schließlich zu den gewünschten Verbindungen II cyclisiert.

Die Umsetzung von Hexafluoraceton mit dem Diamid IV erfolgt zweckmäßigerweise in stark polaren organischen Lösungsmitteln, z.B. DMSO, aus denen das Produkt V durch Ausfällen mit Wasser isoliert wird.

Die Wasserabspaltung wird unter Kühlung, vorzugsweise bei Temperaturen von 0-(-40) °C, beispielsweise mit Hilfe

von Pyridin/Trifluoressigsäureanhydrid, durchgeführt.

Der Ringschluß der Acylimingruppen in VI unter Bildung von II erfolgt vorteilhaft mit wasserfreien Zinn(II)chlorid in siedendem Toluol.

Säureamideder Formel IV sind aus den entsprechenden Dicarbonsäuren $Z(COOH)_2$ erhältlich; Azodicarbonamid ($H_2N$-CO-N=N-CO-$NH_2$), Acetylendicarbonsäure (OH-CO-C≡C-CO-OH), Perfluoradipinsäure, und Perfluorbernsteinsäure sowie verschiedene Pyridincarbonsäuren sind kommerziell erhältlich und können leicht nach allgemein bekannten Methoden in die entsprechenden Amide übergeführt werden. Andere heteroaromatische Dicarbonsäuren (z.B. verschiedene Furandicarbonsäuren) sind in der chemischen Literatur beschrieben.

Die Dihydroxyverbindungen der Formel III sind durchweg bekannt. Bevorzugte Dihydroxyverbindungen sind Verbindungen der Formel IIIa

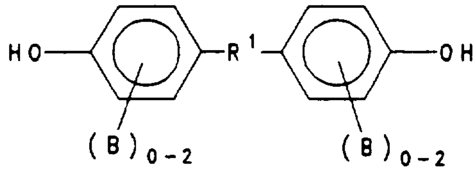

(IIIa)

worin $R^1$ gleich $CH_2$, O, CO, $SO_2$, $C(CH_3)_2$, $C(CF_3)_2$, Phenylen,

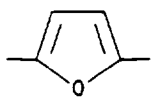 , 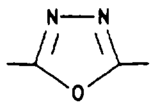 , 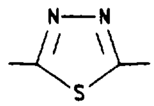

oder eine direkte Bindung, und B gleich Halogen, insbesondere Cl, F oder Br, oder $C_1$-$C_4$-Alkyl ist und die einzelnen Phenylenringe durch 0, 1 oder 2 Gruppen B substituiert sind.

Die Reste B befinden sich bevorzugt in 3- oder 3,5-Stellung zu $R^1$. Besonders bevorzugt sind Verbindungen der Formel IIIa in denen B gleich H und $R^1$ gleich $CH_2$, CO, $C(CH_3)_2$ oder $C(CF_3)_2$ ist.

Zur Begrenzung des Molgewichts der anfallenden Polymeren sowie zum Verschließen der Kettenenden durch Aryloxy-Gruppen kann man bis zu 5 Mol-% eines Kettenabbrechers (bezogen auf Diphenole) zusetzen. Als Kettenabbrecher werden vorzugsweise Phenol oder substituierte Phenole, Hydroxydiphenyl oder Naphthole in Mengen von 0,01 bis 5 Mol.-% (bezogen auf Diphenole) verwendet. Darüberhinaus kann das Molekulargewicht durch die Temperaturführung gesteuert werden.

Die Polymeren gemäß der Erfindung sind amorph und besitzen im allgemeinen Glastemperaturen von 120 °C bis 170 °C. Einige können bei Temperaturen oberhalb 280 °C unter Luft oder Stickstoff einen Gewichtsverlust erleiden, der von einer Energieaufnahme (endotherme Reaktion) begleitet ist.

Die erfindungsgemäßen heteroaromatischen Polyether sind in diversen organischen Lösungsmitteln wie Aceton, Ethylacetat, THF, Toluol und Chloroform gut löslich und zeichnen sich somit gegenüber bekannten Polymeren durch eine wesentlich verbesserte Löslichkeit aus. Die Polyether gemäß der Erfindung können in verschiedenster Weise verwendet werden. Einige mögliche Anwendungen sind z.B.

1) als Thermoplast zur Herstellung von Spritzgußartikeln und Extrudaten z.B. für Stäbe, Rohre, Faser, Folien

2) Herstellung von Beschichtungen, z.B. aus Lösung

3) Herstellung von Filmen und Membranen aus Lösung

4) Herstellung von Polymerlegierungen mit Polyarylenen (Polyetherketone, Polyethersulfone, Polyether, Polysulfone), Polyamiden (Polyaramide, partiell aromatische Polyamide, Nylon-6, Nylon-6,6), Polyestern (®Durel, PET, PDT), Polyolefinen (PP, PE, Cycloolefincopolymere), Vinylpolymeren (Polystyrol, Poly($\alpha$-methylstyrol), PMMA, Polyacrylnitril), Polycarbonaten (z.B. auf Basis von Bisphenol-A).

Die Erfindung wird durch die nachstehenden Beispiele erläutert.

Die Molmassen wurden mit einem Gelpermeationschromatographen der Firma Waters-Millipore, Eschborn, Bundesrepublik Deutschland, Modell 150-C relativ zu kommerziell erhältlichen Polystyrol-Standards ermittelt.

Die Bestimmung der Glasübergangstemperatur ($T_G$) erfolgte mittels eines Differentialkalorimeters DSC7 der Fa. Perkin Elmer, Überlingen, Bundesrepublik Deutschland, bei einer Aufheizrate von 20 °C/Minute.

Die in den Beispielen verwendeten Dihydroxyverbindungen besitzen die Formeln:

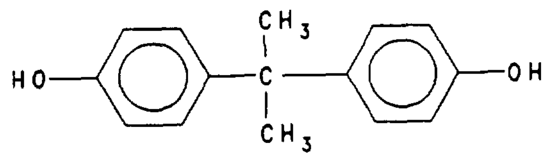

(2)

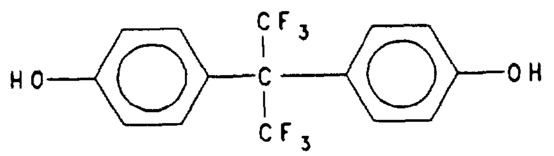

(3)

Beispiel 1:

622 mg (1,6 mmol) Monomer der Formel 1 und 369 mg (1,6 mmol) Bisphenol A (s. Formel 2) werden in 12 ml absolutem DMSO gelöst. Zur Bildung des Phenolates in situ und zum Abfangen des bei der Polymerisation gebildeten Fluorwasserstoffs werden 388 mg (3,86 mmol) Tri-ethylamin zugegeben. Die Mischung wird in einem geschlossenen Gefäß für 3 h auf 80 °C erhitzt. Gegen Ende der Reaktion fällt das Polymer aus. Nach der Reaktion wird das Polymer abfiltriert, in Toluol gelöst, aus Methanol gefällt und anschließend getrocknet. Das Produkt besitzt eine Molmasse $M_w$ = 124000 g/mol. Seine Glasübergangstemperatur liegt bei 150 °C.

Beispiel 2:

427 mg (1,1 mmol) Monomer der Formel 1 und 373 mg (1,1 mmol) Hexafluorbisphenol A (s. Formel 3) werden in 10 ml absoluten DMSO gelöst. Als Base zur Bildung des Phenolates in situ und zum Abfangen des Fluorwasserstoffes, der bei der Polymerisation gebildet wird, werden 267 mg (2,64 mmol) Triethylamin zugegeben. Die Mischung wird für 2 h in einem druckbeständigen geschlossenen Gefäß auf 140 °C erhitzt. Beim Abkühlen nach Beendigung der Reaktion fällt das Polymer aus. Es wird in Toluol gelöst, aus Methanol gefällt und getrocknet. Das Produkt besitzt eine Molmasse von M = 17600 g/mol, seine Glasübergangstemperatur liegt bei 147 °C.

Beispiel 3:

Herstellung des Monomers der Formel 1

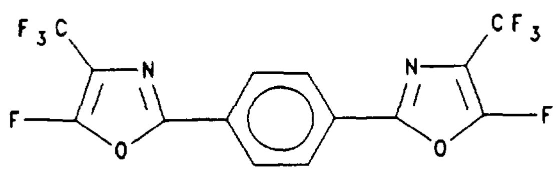

(1)

a) Auf eine Suspension von 16,4 g (100 mmol) Terephthalsäurediamid in 250 ml absolutem DMSO wird bei Raumtemperatur in eine mit Trockeneisrückflußkühler und Überdruckventil versehene Apparatur unter kräftigem Rühren Hexafluoraceton geleitet. Nach beendeter Gasabsorption wird das Reaktionsgemisch auf 300 ml Wasser gegeben, wobei das Produkt ausfällt. (Dieser Schritt stellt eine wesentliche Verbesserung gegenüber dem bekannten Verfahren (K. Geith, Dissertation 1988, TU München) dar, nach dem das Produkt mit einem großen Überschuß an Methylenchlorid aus wäßrigem DMSO extrahiert wird, da das neue Verfahren Ausbeuten > 95 %, gegenüber < 70 % beim bekannten Verfahren ermöglicht). Das Produkt wird abfiltriert, mehrmals mit destilliertem Wasser gewaschen, um restliches DMSO zu entfernen, und schließlich bei vermindertem Druck ( < 1 bar) über Phosphorpentoxid getrocknet. Ausbeute: > 95 %, farblose Kristalle, Zersetzung > 265 °C.

b) 15 g (30 mmol) des Produktes aus a) werden in 250 ml absolutem Ether gelöst. Dann werden bei -10 °C (Eis/Kochsalz-Kältemischung) gleichzeitig 8,4 ml (60 mmol) Trifluoressigsäureanhydrid und 9,8 ml (120 mmol) Pyridin innerhalb einer Stunde zugetropft. Es wird noch eine Stunde bei 0 °C gerührt, danach wird der Reaktionsansatz für zwei Tage bei einer Temperatur von -30 °C stehengelassen. Dann wird das ausgefallene Pyridiniumtrifluoracetat abfiltriert, das Lösungsmittel bei vermindertem Druck (< 1 bar) abgezogen und der Rückstand in Hexan aufgenommen. Die Hexanlösung wird filtriert und eingeengt. Bei -30 °C kristallisiert das Produkt aus. Ausbeute: 52 %, farblose Kristalle, Fp.: 78 °C.

c) 6,9 g (15 mmol) des Produktes aus b) werden in 70 ml absolutem Toluol gelöst, 5,7 g (30 mmol) wasserfreies Zinn(II)chlorid zugegeben und die Reaktionsmischung für 48 h zum Rückfluß erhitzt. Nach Beendigung der Reaktion wird der unlösliche Rückstand abfiltriert und das Lösungsmittel im Vakuum entfernt. Das Rohprodukt wird zunächst durch Säulenchromatographie gereinigt und anschließend aus Chloroform umkristallisiert. Ausbeute: 40 %, gelbliche Kristalle, Fp.: 149 °C.

Beispiel 4:

635,2 mg (1,65 mmol) Monomer der Formel 1 und 413,7 mg (1,65 mmol) 4,4'-Dihydroxydiphenylsulfon werden in 6 ml absolutem N-Methylpyrrolidon (NMP) gelöst. Zur Bildung des Phenolates und zum Abfangen des bei der Polymerisation gebildeten Fluorwasserstoffes werden 0,6 ml absolutes Triethylamin zugegeben. Die Reaktionsmischung wird anschließend in einem druckbeständigen geschlossenen Gefäß für 20 h auf 50 °C erwärmt. Danach wird die Mischung mit 10 ml THF verdünnt und das Polymer durch Eingießen in Methanol gefällt. Das Polymer wird abfiltriert, mit Methanol und Wasser gewaschen und im Vakuum bei 80 °C bis zur Gewichtskonstanz getrocknet.

Das so erhaltene Polymer ist schwach gelb gefärbt. Es ist bei Raumtemperatur löslich in DMSO, NMP, DMAc und THF. Seine Molmasse beträgt $\overline{M_n}$ = 18500 g/mol bzw. $\overline{M_w}$ = 64000 g/mol (GPC mit Polystyroleichung). Die Glasübergangstemperatur liegt bei $T_g$ = 190 °C (Heizrate 10 K/min). Das Polymer zeigt in der thermogravimetrischen Messung einen Beginn des Gewichtsverlustes bei 319 °C an Luft (Heizrate 10 K/min), der von einer Energieabgabe (exotherme Reaktion) begleitet ist.

Beispiel 5:

634,0 mg (1,65 mmol) Monomer der Formel 1 und 353,5 mg (1,65 mmol) 4,4'-Dihydroxybenzophenon werden in 6 ml absolutem NMP (= N-Methylpyrrolidon) gelöst. Zur Phenolatbildung und zum Abfangen des durch die Reaktion gebildeten Fluorwasserstoffes werden 0,6 ml absolutes Triethylamin zugesetzt. Diese Mischung wird für 7 h auf 50 °C erwärmt. Danach wird mit 10 ml NMP verdünnt und das Polymer durch Eingießen in Methanol gefällt. Das Polymer wird abfiltriert, mit Methanol und Wasser gewaschen und im Vakuum bei 80 °C bis zur Gewichtskonstanz getrocknet.

Das so erhaltene Polymer ist schwach gelb gefärbt. Es ist bei erhöhter Temperatur löslich in NMP und DMAc. Seine Glasübergangstemperatur liegt bei $T_g$ = 167 °C (Heizrate 20 K/min). Daneben besitzt es einen Kristallitschmelzpunkt vom $T_m$ = 278 °C. Das Polymer zeigt an Luft eine Beginn des Gewichtsverlustes bei 310 °C (Heizrate 10 K/min) in einer exothermen Reaktion.

Beispiel 6:

646,7 mg (1,68 mmol) Monomer der Formel 1 und 384,1 mg (1,68 mmol) Bisphenol A werden in 6 ml absolutem N,N-Dimethylacetamid (DMAc) gelöst. Zur Phenolatbildung und zum Abfangen des bei der Reaktion gebildeten Fluorwasserstoffs werden 0,6 ml absolutes Triethylamin zugegeben. Diese Mischung wird in einem geschlossenen druckbeständigen Gefäß für 20 h auf 50 °C erwärmt. Anschließend wird die Mischung mit 10 ml THF verdünnt und das Polymer durch Eingießen in Methanol gefällt. Das Polymer wird abfiltriert, mit Methanol und Wasser gewaschen und im Vakuum bei 80 °C bis zur Gewichtskonstanz getrocknet.

Das so erhaltene Polymer ist gelb gefärbt. Es ist bei Raumtemperatur löslich in Aceton, Chloroform, NMP, DMAc, THF und Toluol. Seine Molmasse beträgt $\overline{M_n}$ = 9500 g/mol bzw. $\overline{M_w}$ = 19000 g/mol (GPC mit Polysryroleichung). Die Glasübergangstemperatur liegt bei $T_g$ = 143 °C (Heizrate 20 K/min), und in der Thermogravimetrie zeigt das Polymer einen Beginn des Gewichtsverlustes bei 300 °C an Luft (Heizrate 10 K/min), wobei eine exotherme Reaktion abläuft.

Beispiel 7:

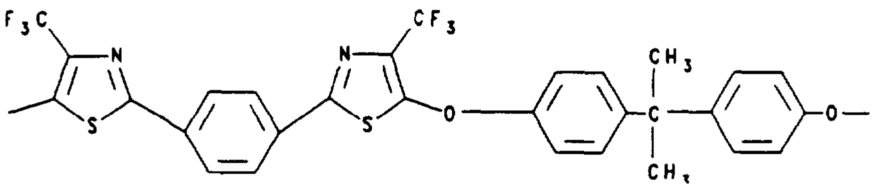

679 mg (1,63 mmol) Bis-(4-fluor-5-trifluormethyl-thiazolyl)-phenylen und 372,6 mg (1,63 mmol) Bisphenol A werden in 6 ml absolutem DMSO gelöst. Zusätzlich werden 0,6 ml absolutes Triethylamin zur Phenolatbildung und zum Abfangen des bei der Reaktion gebildeten Fluorwasserstoffes zugegeben. Diese Mischung wird in einem druckbeständigen geschlossenen Gefäß für 2 h auf 100 °C erhitzt. Nach dem Abkühlen wird die Mischung mit 5 ml THF verdünnt und das Polymer durch Eingießen in Methanol ausgefällt. Das Produkt wird abfiltriert, mit Methanol gewaschen und im Vakuum bei 80 °C bis zur Gewichtskonstanz getrocknet. Das Produkt ist bei Raumtemperatur löslich in THF und DMSO. Molmasse: $\overline{M}_W$ = 3500 g/mol (GPC mit Polystyroleichung).

## Patentansprüche

**1.** Polyether mit Wiederholeinheiten der Formel I

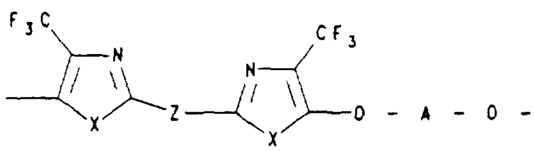 (I) ,

worin

A einen divalenten Arylen- oder Heteroarylen-Rest,
X O, S oder NR,
Z einen divalenten Arylen- oder Heteroarylenrest, die Ethinylen-, Azo- oder $(CF_2)_n$-Gruppe, wobei n eine ganze Zahl von 1 bis 4 ist,
R Aryl, vorzugsweise Phenyl,

bedeuten.

**2.** Polyether gemäß Anspruch 1, dadurch gekennzeichnet, daß A = 1,2-, 1,3- oder 1,4-Phenylen, 2,6-Naphthylen oder deren kernalkylierte oder kernhalogenierte Derivate, oder

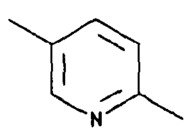 und 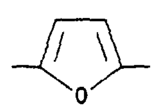 .

oder eine Struktureinheit der Formel

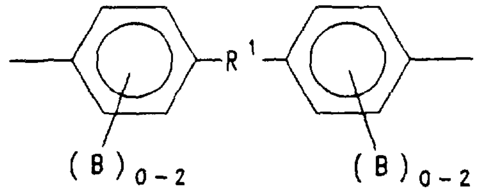

worin $R^1$ $CH_2$, O, CO, $SO_2$, $C(CH_3)_2$, $C(CF_3)_2$, Phenylen,

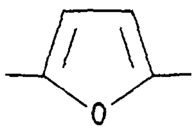 , 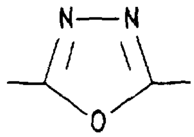 , 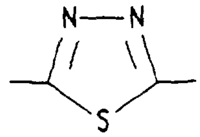

oder eine direkte Bindung bedeuten und B, falls vorhanden, gleich Halogen, vorzugsweise Cl oder Br, oder $C_1$-$C_4$-Alkyl, vorzugsweise $CH_3$, ist,
X = 0, und
Z =

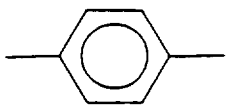 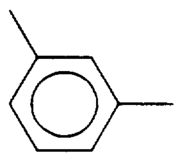 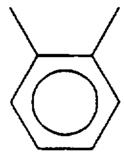 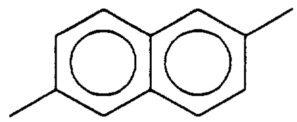

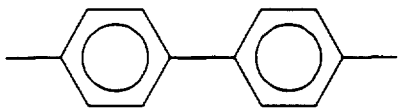 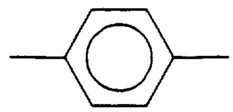 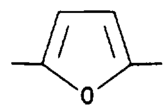

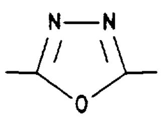 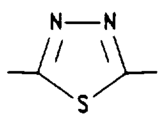 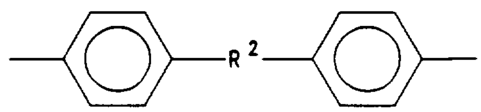

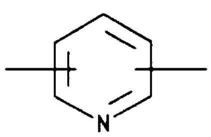 $-C\equiv C-$ (= Ethinylen) $-N=N-$

oder

$$-(CF_2)_{1-4}-,$$

mit $R^2$ gleich $CH_2$, O, CO, $SO_2$, $C(CH_3)_2$ oder $C(CF_3)_2$
ist.

**3.** Polyether gemäß Anspruch 1 mit Wiederholeinheiten der Formel Ia

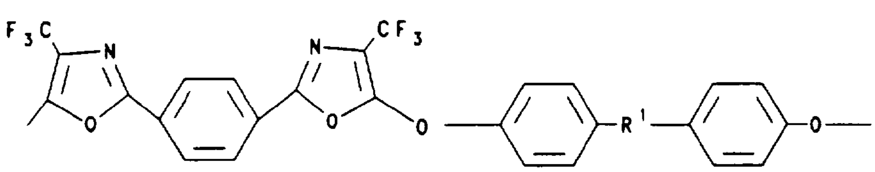 (Ia) ,

worin $R^1$ gleich $CH_2$, CO, $C(CH_3)_2$ oder $C(CF_3)_2$ ist.

**4.** Verfahren zur Herstellung von Polyethern gemäß Anspruch 1 dadurch gekennzeichnet, daß man Halogenverbindungen der Formel II

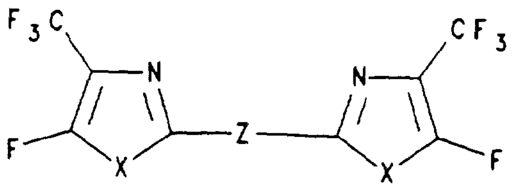

(II)

worin X und Z die obengenannte Bedeutung haben, mit Dihydroxyverbindungen der Formel III

HO-A-OH (III),

worin A die obengenannte Bedeutung hat, in Gegenwart einer Base polykondensiert.

5. Verfahren nach Anspruch 4, dadurch gekennzeichnet, daß man die Polykondensation mittels Trialkylaminen als Base durchführt.

6. Verwendung der Polyether gemäß Anspruch 1 als Thermoplast zur Herstellung von Spritzgußartikeln und Extrudaten.

7. Verwendung der Polyether gemäß Anspruch 1 zur Herstellung von Beschichtungen.

8. Verwendung der Polyether gemäß Anspruch 1 zur Herstellung von Filmen und Membranen aus Lösung.

9. Verwendung der Polyether gemäß Anspruch 1 zur Herstellung von Polymeriegierungen.

## Claims

1. A polyether containing recurring units of the formula I

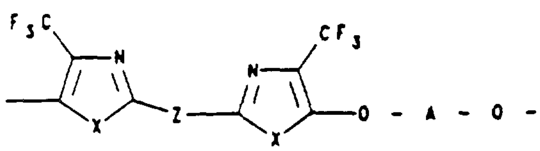

(I)

in which

A is a divalent arylene or heteroarylene radical,
X is O, S or NR,
Z is a divalent arylene or heteroarylene radical or the ethinylene, azo or $(CF_2)_n$ group, where n is an integer from 1 to 4,
R is aryl, preferably phenyl.

2. A polyether as claimed in claim 1, wherein A is 1,2-, 1,3- or 1,4-phenylene, 2,6-naphthylene or a ring-alkylated or ring-halogenated derivative thereof, or

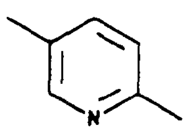

and

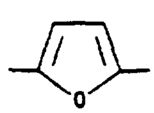

or a structural unit of the formula

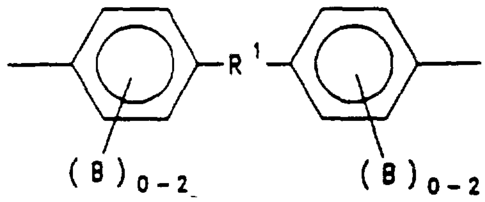

in which $R^1$ is $CH_2$, O, CO, $SO_2$, $C(CH_3)_2$, $C(CF_3)_2$, phenylene,

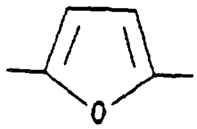 , 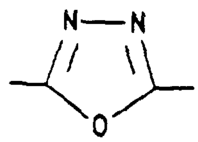 , 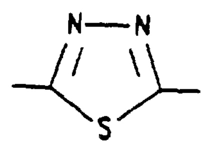

or a direct bond, and B, if present, is halogen, preferably Cl or Br, or $C_1$-$C_4$-alkyl, preferably $CH_3$,
X is O, and
Z is

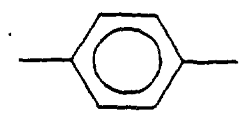 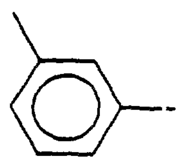 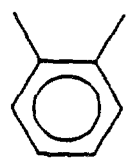 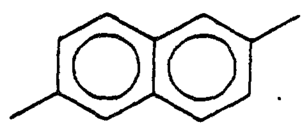

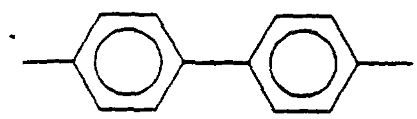 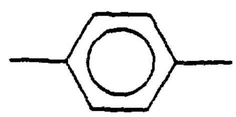 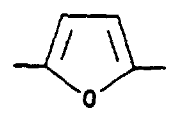

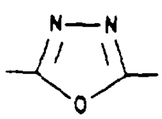 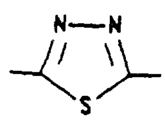 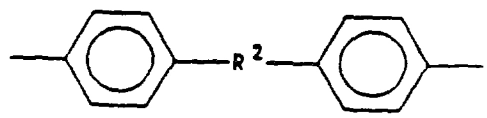

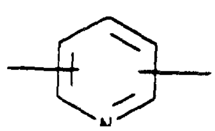 $-C\equiv C-$ (= ethinylene) $-N=N-$

or

$$-(CF_2)_{1-4}-$$

where $R^2$ is $CH_2$, O, CO, $SO_2$, $C(CH_3)_2$ or $C(CF_3)_2$.

**3.** A polyether as claimed in claim 1, containing recurring units of the formula Ia

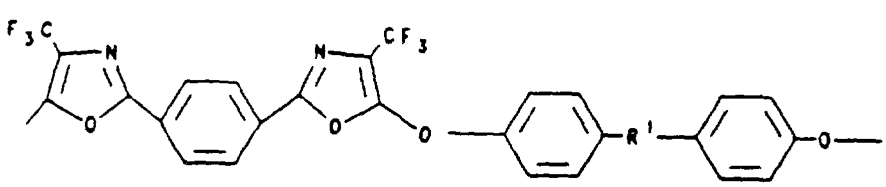 (Ia)

in which $R^1$ is $CH_2$, CO, $C(CH_3)_2$ or $C(CF_3)_2$.

**4.** A process for the preparation of a polyether as claimed in claim 1, which comprises subjecting a halogen compound of the formula II

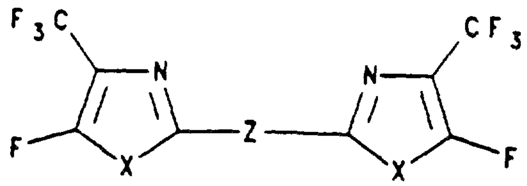

(II)

in which X and Z have the abovementioned meaning, to a polycondensation reaction with a dihydroxy compound of the formula III

HO-A-OH (III)

in which A has the abovementioned meaning, in the presence of a base.

**5.** The process as claimed in claim 4, wherein the polycondensation is carried out by means of a trialkylamine as a base.

**6.** The use of a polyether as claimed in claim 1 as a thermoplastic for the production of injection-molded articles and extrudates.

**7.** The use of a polyether as claimed in claim 1 for the production of coatings.

**8.** The use of a polyether as claimed in claim 1 for the production of films and membranes from solution.

**9.** The use of a polyether as claimed in claim 1 for the production of polymer alloys.

## Revendications

**1.** Polyéthers ayant des unités constitutives de formule I

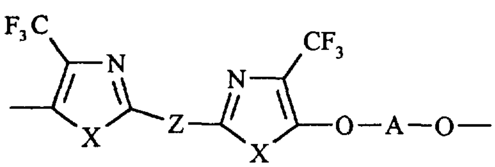

(I)

dans laquelle

A représente un reste arylène ou hétéroarylène divalent,
X est O, S ou NR,
Z est un reste arylène ou hétéroarylène divalent ou un groupe éthynylène, azo ou $(CF_2)_n$, n étant un nombre entier de 1 à 4,
R est un reste aryle, de préférence un reste phényle.

**2.** Polyéthers selon la revendication 1, caractérisé en ce que A représente un reste 1,2-, 1,3- ou 1,4-phénylène, 2,6-naphtylène ou leurs dérivés alkylés sur le noyau ou halogénés sur le noyau , ou

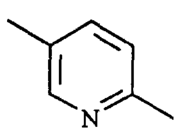 et 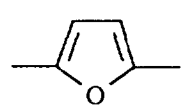 ,

ou une unité de structure de formule:

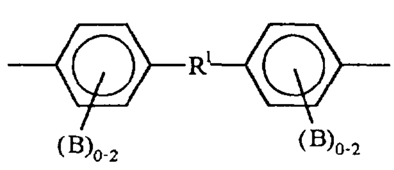

dans laquelle $R^1$ représente $CH_2$, O, CO, $SO_2$, $C(CH_3)_2$, $C(CF_3)_2$, un reste phénylène,

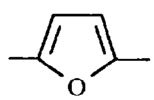 , 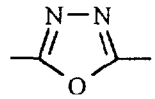 , 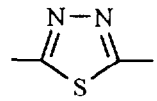

ou une liaison directe, et B, quand il est présent, représente un halogène, de préférence Cl ou Br, ou un alkyle en $C_1$-$C_4$, de préférence $CH_3$,
X est O, et
Z est

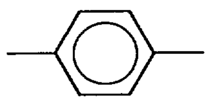 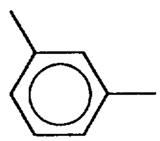 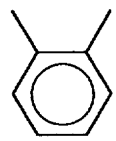 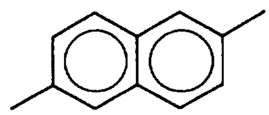

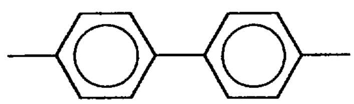 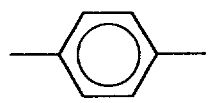 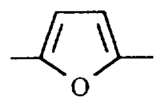

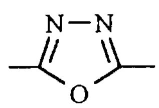 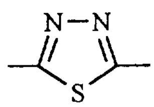 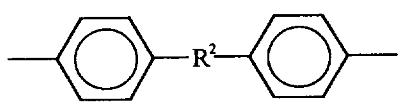

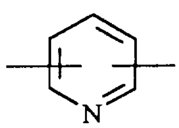 , $-C{\equiv}C-$ (= éthynylène), $-N{=}N-$ ou $-(CF_2)_{1-4}-$,

où $R^2$ représente $CH_2$, O, CO, $SO_2$, $C(CH_3)_2$ ou $C(CF_3)_2$.

**3.** Polyéthers selon la revendication 1, avec des unités constitutives de formule Ia:

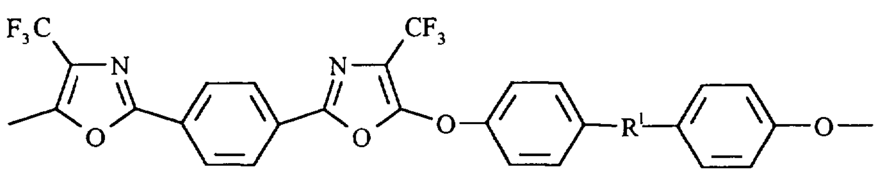 (Ia),

dans laquelle $R^1$ représente $CH_2$, CO, $C(CH_3)_2$ ou $C(CF_3)_2$.

**4.** Procédé de préparation de polyéthers selon la revendication 1, caractérisé en ce que l'on effectue la polycondensation de composés halogénés de formule II

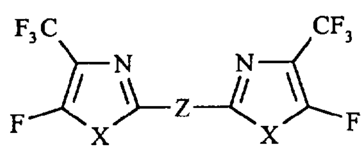 (II)

dans laquelle X et Z ont la signification indiquée ci-dessus, avec des composés dihydroxy de formule III

HO-A-OH (III),

dans laquelle A la signification indiquée ci-dessus, en présence d'une base.

5. Procédé selon la revendication 4, caractérisé en ce que l'on effectue la polycondensation en utilisant comme base une trialkylamine.

6. Utilisation des polyéthers selon la revendication 1 comme thermoplastes pour la production d'articles moulés par injection et de produits extrudés.

7. Utilisation des polyéthers selon la revendication 1 pour la production de revêtements.

8. Utilisation des polyéthers selon la revendication 1 pour la production de films et de membranes à partir de solutions.

9. Utilisation des polyéthers selon la revendication 1 pour la préparation d'alliages de polymères.